# EUROPEAN PATENT SPECIFICATION

(11) **EP 1 236 310 B1**
(45) Date of publication and mention of the grant of the patent: **25.07.2007**
(21) Application number: 00985468.8
(22) Date of filing: 06.12.2000
(51) Int. Cl.: H04L 12/28, H04L 29/12

(54) **DOMESTIC COMMUNICATION AND ENTERTAINMENT SYSTEM**
HAUSKOMMUNIKATIONS- UND UNTERHALTUNGSSYSTEM
SYSTEME DOMESTIQUE DE COMMUNICATION ET DE DIVERTISSEMENT

(30) Priority: 07.12.1999 GB 9928936
(43) Date of publication of application: 04.09.2002
(73) Proprietor: Interoute Communications Limited, London E14 9SG (GB)
(72) Inventor: DE BEER, Leon, Berkshire RG14 7RG (GB)
(74) Representative: Beresford, Keith Denis Lewis
(86) International application number: PCT/GB2000/004662
(87) International publication number: WO 2001/043352

(56) References cited:
- EP-A- 0 932 275
- FR-A- 2 778 046

## Description

This invention relates to domestic communication and entertainment systems and in particular to such systems in which a plurality of devices of the system are interconnected by a data bus, one or more of the devices being required on demand to initiate one way or two way external communication.

Domestic or consumer premises utilise increasingly diverse telecommunications and there is a move towards integrating the devices which provide various telecommunications functions by connecting the devices with a network allowing the resulting system to have improved interconnectivity.

It is known from US 5535208 or from EP-A-0 932 275 to provide a high performance serial bus using the IEEE P1394 protocol to provide audio and video signal communication between a number of devices in such a system.

A further trend is the progressive deregulation of telecommunication services such as television, radio, telephone voice and data transmission services and the provision of view-on-demand video via networks such as the Internet and cable networks.

A user of such a system may therefore be faced with a choice of a number of alternative routes for communicating externally of the system, for example to make a telephone call, receive digital video data or to access online information from a remote entity.

The present invention seeks to provide an improved system and method of using such a system.

According to the present invention there is disclosed a method of operating a domestic communication and entertainment system in which a plurality of devices of the system are interconnected by a data bus.

Preferably, when a first one of the devices receives a demand for a task requiring a communication session with an entity which is external to the system, the first device transmits to a routing device connected to the data bus a request message for routing information defining a preferred route for initiating the communication session.

The routing device transmits to the first device a response message comprising the routing information.

The first device may then initiate the communication session via a route determined by the routing information.

Preferably the routing device obtains the requested routing information by addressing a look-up table which is populated with data which is updated periodically by the transmission of updating data to the routing device. The transmission of the updating data in a preferred embodiment is by a wireless broadcast, the routing device comprising an antenna and receiver for receiving the updating information.

According to a further aspect of the present invention there is disclosed a system for use in providing domestic communication and entertainment telecommunications, the system comprising a plurality of devices, each device having communication means for performing at least one of sending and receiving telecommunications signals, and a data bus interconnecting the devices and operable to conduct telecommunications signals therebetween.

Preferably a routing device is connected to the data bus, the routing device being operable to receive a request message for routing information from one of the devices and further operable to respond by generating a response message comprising the routing information for receipt by the device originating the request message.

The device originating the request message is preferably operable to initiate a communication session with an entity which is external to the system via a route determined by the routing information.

Preferably the system comprises means for receiving updating data from a control centre external to and remote from the system and means for updating the look-up table with received updating data.

The updating data may be received via a receiver forming part of the routing device, such a wireless receiver, or alternatively one of the devices of the system may receive the updating information and communicate the updating information to the routing device via the data bus.

According to a further aspect of the present invention there is disclosed a routing device for use in a domestic communication and entertainment system, the device comprising;
an interface for connection in use to a data bus;
a look-up table populated with data defining routing information;
a route selector operable to address the look-up table in response to receipt of a request message via the interface for routing information; and
a controller operable to generate a response message output via the interface and comprising the routing information.

Other aspects of the invention are disclosed in the appended claims.

Preferred embodiments of the present invention will now be disclosed by way of example only and with reference to the accompanying drawings of which;
Figure 1 is a schematic drawing of a system in accordance with the present invention;
Figure 2 is a schematic drawing of a routing device of the system of Figure 1, indicating functional blocks for the device;
Figure 3 is a schematic drawing of the routing device of Figure 2 illustrating internal connection to a processor and cooperating components;
Figure 4 is a schematic diagram illustrating the structure of the look-up table of Figures 2 and 3;
Figure 5 is a flowchart illustrating the selection of routing information using the routing device of preceding figures;
Figure 6 is a flowchart illustrating the selection of routing information in accordance with an alternative embodiment of the routing device;
Figure 7 is a schematic diagram of an alternative embodiment of the routing device; and
Figure 8 is a schematic diagram of the structure of a domestic communication device for use in the system of Figure 1.

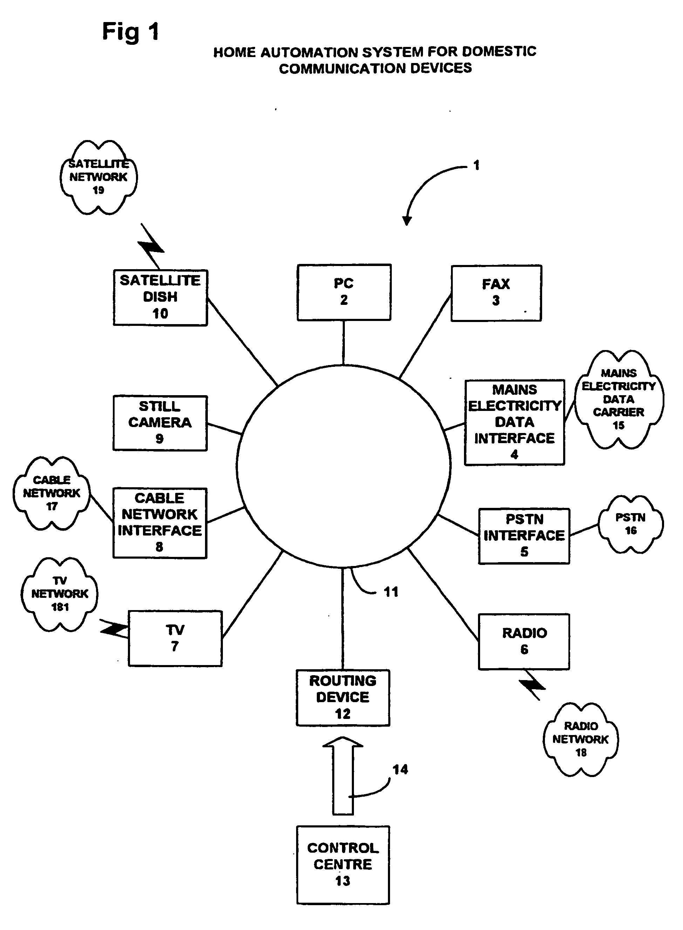

Figure 1 illustrates a domestic communication and entertainment system 1 installed in a domestic environment and comprising a number of independently operable devices for a variety of telecommunications and entertainment purposes. The devices include a personal computer 2, a facsimile machine 3, a data interface 4 for the transmission of telecommunications data over a data network 15 using the conductors of a mains electricity supply, a telephone interface 5 facilitating connection with the public service telephone network 16, a radio receiver 6 for receiving broadcasts from radio networks 18, a television receiver 7 for receiving broadcasts from television networks 181, a cable network interface 8 including a decoder for receiving communication over a cable network 17, a digital still camera 9 and a satellite dish 10 with associated encoder and decoder for receiving broadcast signals from a satellite television network 19 and for transmitting signals to the satellite network.

Each of the above devices of the system 1 is connected to a data bus 11 which is a high performance serial data bus using a protocol defined by IEEE P1394 and which facilitates the transmission of data in isochronous packets and additionally allows asynchronous communication using asynchronous packets. The personal computer 2, in addition to providing functionality normally associated with personal computers, also serves as a bus manager for the data bus 11, thereby performing such functions as assigning channel numbers to devices connected to the data bus and allowing the data bus to be actively reconfigured when devices are added or removed.

Each of the devices of the system 1 is provided with a respective interface with the data bus 11 allowing digital data to be communicated via the data bus, the information content of the packetized data being any one of a number of alternatives including digital data including still images, audio, audio visual or text based code including for example HTML (HyperText Mark-up Language).

The system also includes a device for storing and selecting routing information, hereinafter referred to as a routing device 12, connected to the data bus 11 for storing routing information which may be accessed by any one of the above devices of the system 1 via the data bus, the routing device receiving updating information from a control centre 13 in order to refresh the stored information with up to date information.

The control centre 13 is located externally and remotely from the system 1 and communicates with the routing device 12 periodically using a communications link 14.

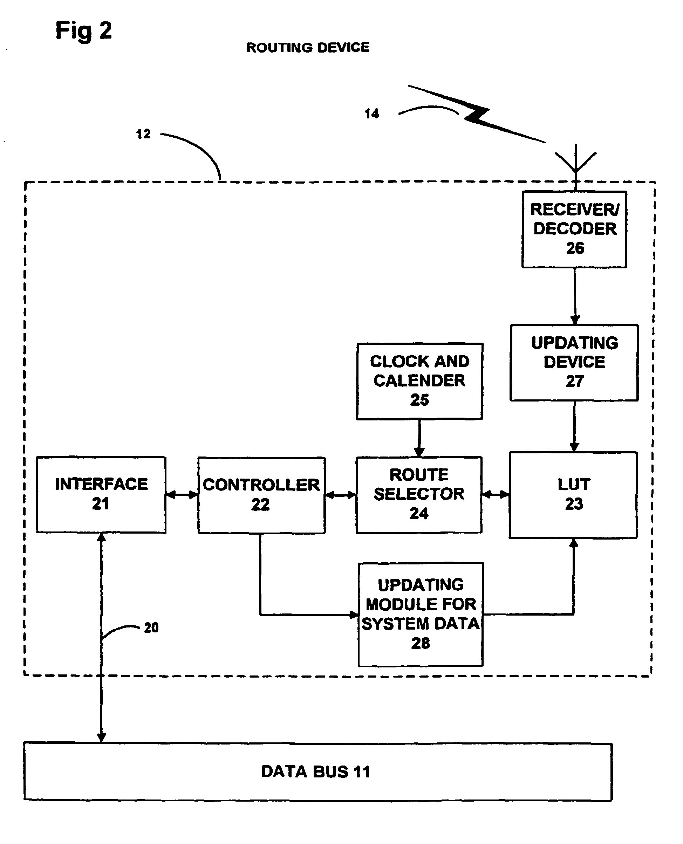

Figure 2 illustrates by way of example the construction of the routing device 12 and in which the communications link 14 is a wireless communications link.

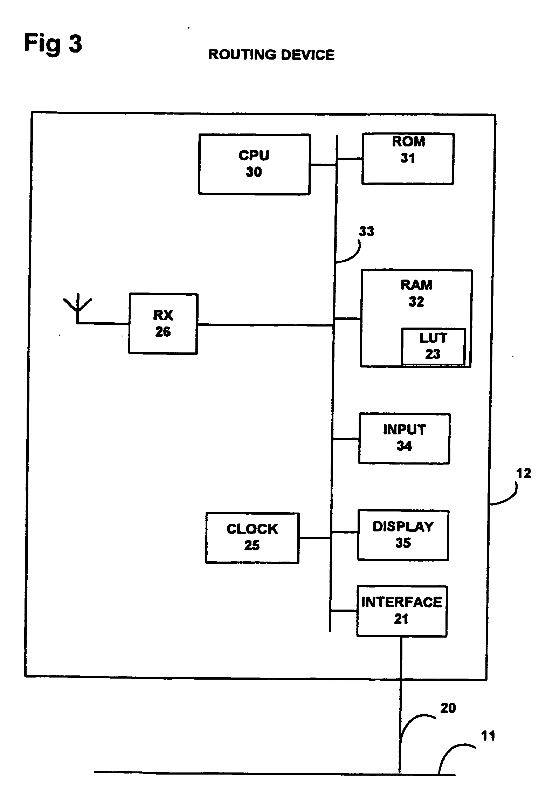

In Figure 2, the construction of the routing device is represented by functional blocks which may be implemented in hardware or, preferably, implemented using a processor and internal data bus in the manner described below with reference to Figure 3.

Referring to Figure 2, the routing device 12 is connected to the data bus 11 by an input line 20 connected to an interface 21 which handles the input and output of data packets in accordance with the operating protocol shared by the devices of the system 1. Both the data bus 11 and the input line 20 comprise twisted pair conductors. The interface 21 inputs received messages to a controller 22 which responds to a request message for route information by a obtaining the routing information from a look-up table 23 via a route selector 24. The route selector 24 addresses the look-up table 23 using an address derived from the content of the request message and the current time and date information obtained from a clock and calendar module 25, thereby allowing the appropriate routing information to be provided in accordance with the time and date at which the request is made and the type of data requested.

The controller 22 generates a response message using the routing information obtained from the look-up table 23 and outputs the response message via the interface 21 to the data bus 11, the response message being addressed to the device which was the originator of the request message using the device number allocated by the bus manager.

The look-up table 23 is populated with data which is periodically updated using updating data broadcast from the control centre 13 and received by a receiver 26. The receiver 26 includes a decoder allowing the updating information to be extracted from the received signal and input to an updating device 27 which overwrites the data populating the look-up table with updating data.

The look-up table 23 is also populated with system data obtained from the bus manager and indicating the availability of devices in the system 1 for providing routes of communication. This information is input into the look-up table 23 by means of an updating module 28 which receives updating information from the controller 22 when messages including such information are transmitted to the routing device 12 from the bus controller via the data bus 11.

Figure 3 illustrates schematically the manner in which the routing device 12 may be implemented using a microprocessor 30 programmed to carry out the functions of the controller referred to above with reference to Figure 2. The processor 30 is connected to ROM (read only memory) 31 and RAM (random access memory) 32 via an internal data bus 33. The look-up table 23 forms part of the RAM 32. The interface 21 is connected to the internal bus 33 together with an internal clock 25, the receiver and decoder circuit 26, an input device 34 in the form of a keypad and a display device 35 in the form of a liquid crystal display for displaying the current status of the routing device.

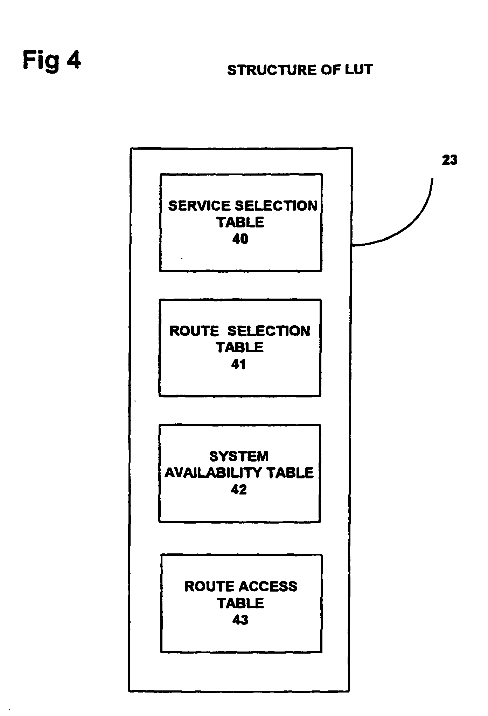

Figure 4 illustrates schematically the structure of the look-up table 23 which comprises a service selection table 40, a route selection table 41, a system availability table 42, and a route access table 43.

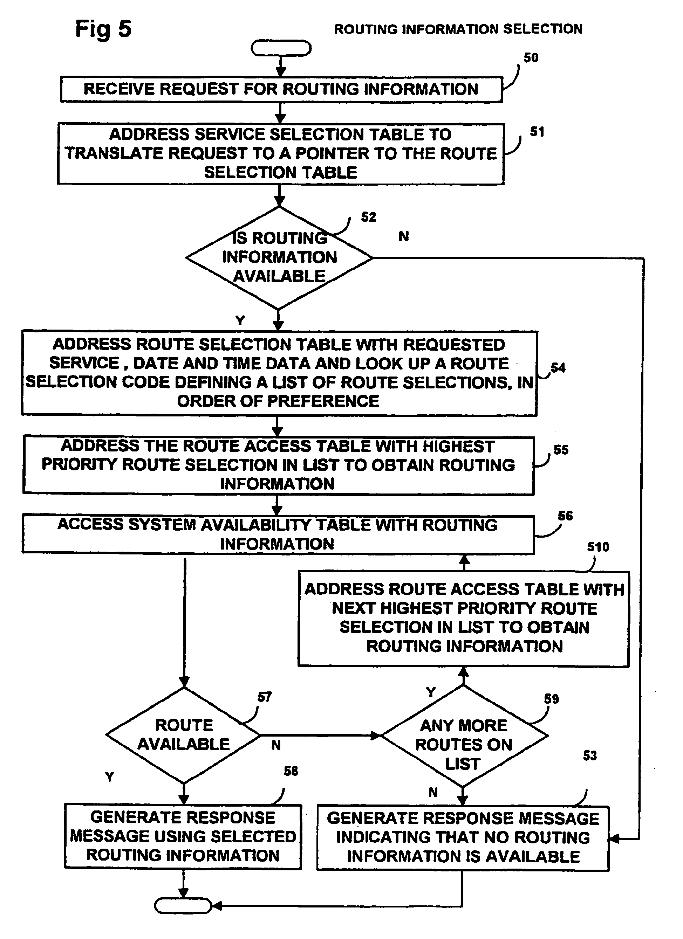

Figure 5 illustrates schematically the sequence in which the look-up table 23 is utilised, commencing at step 50 at which the routing device 12 receives a request message which requests routing information. At step 51, the route selector 24 addresses the service selection table 40 in order to translate the request to a pointer for addressing the route selection table 41. The service selection table 40 therefore stores details of all of the services which may be the subject of a request in the system 1 with pointers to corresponding addresses in the route selection table 41 at which each location stores a route selection code.

If it is determined at step 52 that the request does not correspond to any available pointer in the service selection table 40, the controller 22 generates at step 53 a response message indicating that no routing information is available and a response message is sent via the interface 21 and data bus 11 to the originating device.

If however it is determined at step 52 that a pointer does exist, the route selector 24 addresses the route selection table 41 at step 54 with the requested service together with date and time data in order to look up a route selection code which defines a list of route selections in order of preference.

Taking the highest priority route selection in the list obtained at step 54, the route selector 24 addresses at step 55 the route access table 43 to obtain routing information defining the preferred route.

At step 56, the route selector 24 addresses the system availability table 42 in order to determine whether the system 1 is able to implement the preferred route according to the obtained routing information, the system availability table containing data defining the current status of the system devices.

If at step 57 the route selector 24 determines that the preferred route is in fact available, the controller 22 at step 58 generates a response message using the selected routing information and transmits the response message to the originating device via the interface 21 and data bus 11. The originating device then initiates the communication session required to obtain the required service.

If however at step 57 it is determined that the preferred route is not available, the route selector 24 determines at step 59 whether any more preferred routes remain on the list obtained from the route selection table and, if more routes remain, addresses at step 510 the route access table 43 with the next highest priority route selection in the list to obtain the routing information.

The system availability table 42 is again addressed and steps 56 and 57 repeated.

Ultimately, either the response message will be generated at step 58 or, if the list is exhausted without finding an available route in the system, the controller 22 will generate at step 53 a response message indicating that no routing information is available.

Specific examples of requests for routing information will now be described.

### EXAMPLE 1

In this example, the user actuates the control keypad of the television receiver 7 so as to request an electronic programme guide. The television receiver 7 generates a request message which is transmitted to the routing device 12 where it is received in the controller 22.

The route selector 24 addresses the service selection table 40 where it is found that a pointer to the route selection table 41 exists for this requested service and the route selection table is addressed accordingly. A route selection code is thereby obtained from the route selection table 41, the route selection code defining a list of route selections in order of preference. The order of preference is determined by the control centre 13 on the basis of least cost. The highest priority route selection in the list is in this example for the television receiver 7 to request the supply of the electronic programme guide by transmitting a signal via satellite dish 10 to the satellite television network 19 in order to receive from the network a return transmission of the required electronic programme guide to be presented to the user in the television receiver 7. The route selector 24 addresses the system availability table 42 which confirms that the satellite dish 10 is available in the system 1 and the controller 22 then generates a response message to the television receiver 7 indicating that the preferred route is via the satellite dish 10.

The television receiver 7 then initiates the communications session necessary to request and receive the electronic programme guide, the signal from the television receiver being conducted via the data bus 11 to the encoder of the satellite dish 10 which then transmits to the satellite network 19, the return signal to the satellite dish 10 being decoded and conducted via the data bus 11 to the television receiver for display.

If however the satellite dish 10 is determined not to be available, as indicated by the system availability table 42, the second item in the list is utilised, this selection defining routing information instructing the television receiver 7 to request the electronic programme guide using the cable network interface 8 to access the cable network 17.

### EXAMPLE 2

In this example the user of television receiver 7 wishes to obtain a view-on-demand video.

The user actuates the television receiver 7 to select the required video from the displayed electronic programme guide and, in response to this selection, the television receiver generates a request message which is output onto the data bus 11 to the routing device 12. The request message received in the routing device 12 is processed by the controller 22 which activates the route selector 24 to access the service selection table 40.

The service selection table 40 includes data relating to view-on-demand videos from which the route selector 24 is able to access a pointer to the route selection table 41 for routing information relating to the specific item requested by the user.

The route selection table 41 provides a route selection code defining a list of route selections in order of preference for obtaining the required video, the order of preference having been previously determined by the control centre 13 on the basis of cost. The route selector 24 takes the highest priority route selection from the list and addresses the system availability table 42 with the routing information for this selection which in this example is for the television receiver 7 to obtain the video from the cable network 17 via the cable network interface 8. The route selector 24 determines from the system availability table 42 that the cable network interface 8 is available on the system 1 for this transaction and the controller 22 then generates a response message using this selected route information.

The response message is transmitted by the interface 21 and database 11 to the television receiver 7. On receiving the routing information, the television receiver 7 initiates a communication session with the cable network 17 via the data bus 11 and the cable network interface 8 requesting the supply of the video. The cable network 17 responds by supplying the video via the cable network interface 8 and data bus 11 to the television receiver 7.

In addition to indicating that the cable network 17 is the preferred choice, the routing information also specifies the particular channel and any other information necessary to establish communication and to receive the video.

### EXAMPLE 3

In this example, the user of the personal computer 2 wishes to receive data in the form of a page of HTML (HyperText Mark-up Language) from an address in the World Wide Web, accessible via the Internet. The user operates the personal computer 2 to utilise an application enabling the request for the HTML page to be optimally routed using the routing procedure provided by virtue of the routing device 12 and the computer generates a request message which is output to the data bus 11 using a modem and interface (not shown) and in which received by the routing device 12.

The controller 22 of the routing device 12 activates the route selector 24 to access the service selection table 40 which includes data relating to the preferred choice of Internet service provider for accessing the World Wide Web and to the preferred means of communication to and from the Internet service provider.

The service selection table 40 provides a pointer to the route selection table 41 from which the route selector 24 obtains a route selection code defining a list of route selections in order of preference. The selection with the highest priority is used to address the route access table 43 to obtain routing information which in this example indicates that the preferred route if for the personal computer 2 to send a request to an Internet service provider via the public service telephone network 16 and for the HTML page to be transmitted to the personal computer using the mains electricity data carrier 15 accessible to the system 1 via the mains electricity data interface 4.

The route selector 24 addresses the system availability table 42 and confirms that both the PSTN interface 5 and mains electricity data interface 4 are available to the system 1 and the controller 22 then generates a response message containing the routing information.

The response message is transmitted to the personal computer 2 via the data bus 11 and the personal computer then initiates a communication session with the Internet service provider, a telephone call being generated by the modem of the personal computer 2 and connected to the public service telephone network 16 via the data bus 11 and the PSTN interface 5. The Internet service provider retrieves the requested page of HTML via the Internet and forwards the data via the mains electricity data carrier 15 so that the personal computer 2 receives the page of HTML via the mains electricity interface 4 and data bus 11.

When addressing the route selection table 41, the route selector 24 also inputs the date and time information relevant to the route selection so that, during periods of off-peak telephone calls, the preferred route may alternatively comprise sending both outgoing and incoming communication with the Internet service provider via the PSTN 16.

### EXAMPLE 4

In this example, the user operates the facsimile machine 3 to send a facsimile to a call destination defined by a dialled number. During the dialling of the number, the facsimile machine stores the digits of the dialled number in a buffer memory and detects the initial portion of the dialled number which determines the geographical area within which the specific destination is to be routed, for example by detecting an International dialling code or a long distance area code. After the code is identified, the facsimile machine 3 generates a request message to the routing device 12 which is output via the data bus 11.

In the routing device 12, the route selector 24 addresses the service selection table 40 which contains data relating to the routing of telephone and facsimile calls to allow preferred routing of such calls on the basis of least cost and network performance, as determined by the control centre 7.

The service selection table 40 provides a pointer to the route selection table 41 which is addressed by the route selector 24 together with the current date and time data to retrieve a route selection code defining a list of route selections in order or preference.

The first available route selection in order of preference is used to retrieve from the route access table 43 the routing information which comprises a prefix code to be added to the dialled number in order to route the call via the preferred route.

The routing information is included in a response message transmitted to the facsimile machine 3 over the data base 11 and the facsimile machine 3 then modifies the dialled digits stored in the buffer memory by adding the prefix code obtained from the routing device 12. The facsimile machine 3 then makes a connection with the public service telephone network 16 via the PSTN interface 5 and outputs the buffered and modified number in a communication session routed by the data bus 11. The public service telephone network 16 has a local exchange which identifies the prefix code added to the dialled number and routes the call to a telecommunications network provided by a service provider of the preferred route.

Alternatively, the routing information may indicate that the preferred route for the facsimile message is via two-way satellite connection using the satellite dish 10. In this instance, the routing information transmitted to the facsimile machine 3 includes the necessary data and instruction for accessing the satellite network 19. This may include the addition of a prefix code in a similar manner to routing via the PSTN.

### EXAMPLE 5

In this example, the digital camera 9 contains a number of images requiring processing and printing. The user connects the camera 9 to the data bus 11 and actuates the camera to generate a request message transmitted to the routing device 12 via the data bus 11.

In the routing device 12, the route selector 24 addresses the service selection table 40 which includes data relating to the preferred method of obtaining such printed photographs, allowing selection between different service providers and routes of communication between the camera and the service providers.

The route selector 24 addresses the route selection table 41 using a pointer obtained from the service selection table 40 and obtains a route selection code which is then used to access the route access table 43 to obtain the routing information. In this example, the routing information defines the service provider and provides the telephone number of the provider which is accessible via the PSTN 16, the routing information additionally providing protocol and log-on parameters needed to access this service.

A response message is transmitted from the routing device 12 via the data bus 11 to the camera 9 which then initiates a communications session with the service provider by making a telephone call via the data bus 11 to access the PSTN interface 5 and the PSTN 16.

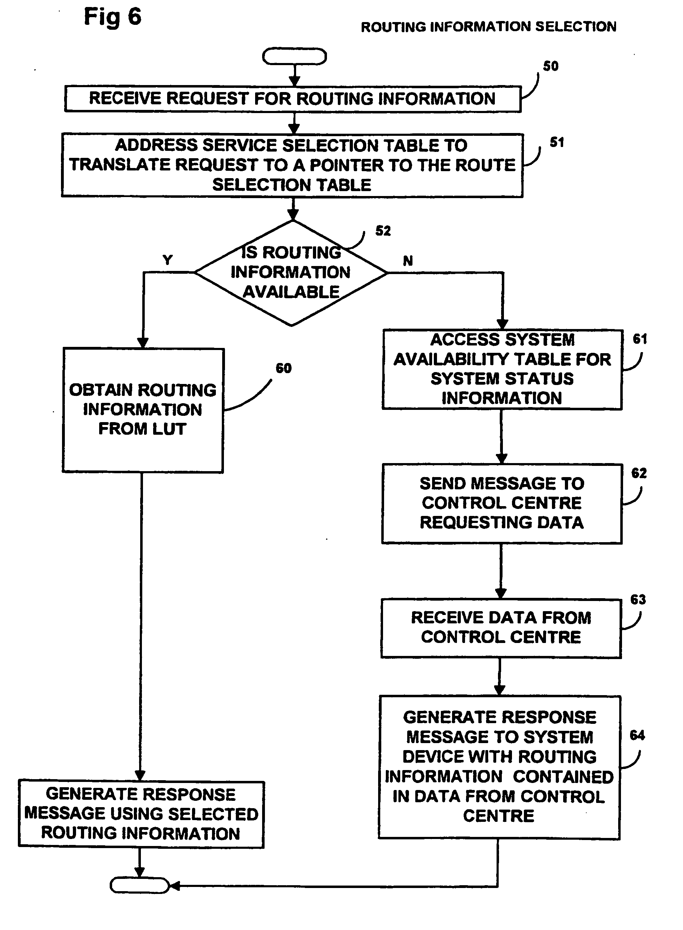

An alternative embodiment will now be described with reference to Figure 6 using corresponding reference numerals to previous figures where appropriate.

In this embodiment, a routing device 12 as shown above in Figures 1 to 4 receives at step 50 a request for routing information from one of the devices connected to the data bus 11 in the system 1. The route selector 24 at step 51 addresses the service selection table 40 and, if at step 52 the requested service is found to correspond to a pointer to the route selection table 41, the routing information is obtained from the look-up table at step 60 using steps which correspond to steps 54 to 510 in Figure 5.

If however at step 52 it is determined that no pointer exists in the service selection table 40 in respect of the requested service, the route selector 24 accesses the system availability table 42 to obtain the current system status information at step 61 and at step 62 sends a message to the control centre 13 requesting the routing information required in accordance with the request received from the device of the system 1.

The message to the control centre 13 includes the system status information so that the control centre is able to take account of the system availability when providing the routing information contained in a response transmitted to the routing device 12. Both the request and response message are transmitted via the data bus 11 and one of the devices of the system 1 such as for example the PSTN interface 5 and public service telephone network 16.

At step 63 the data is received from the control centre in the controller 22 which at step 64 generates a response message to the device of the system 1 including the requested routing information which is obtained from the data received from the control centre 13.

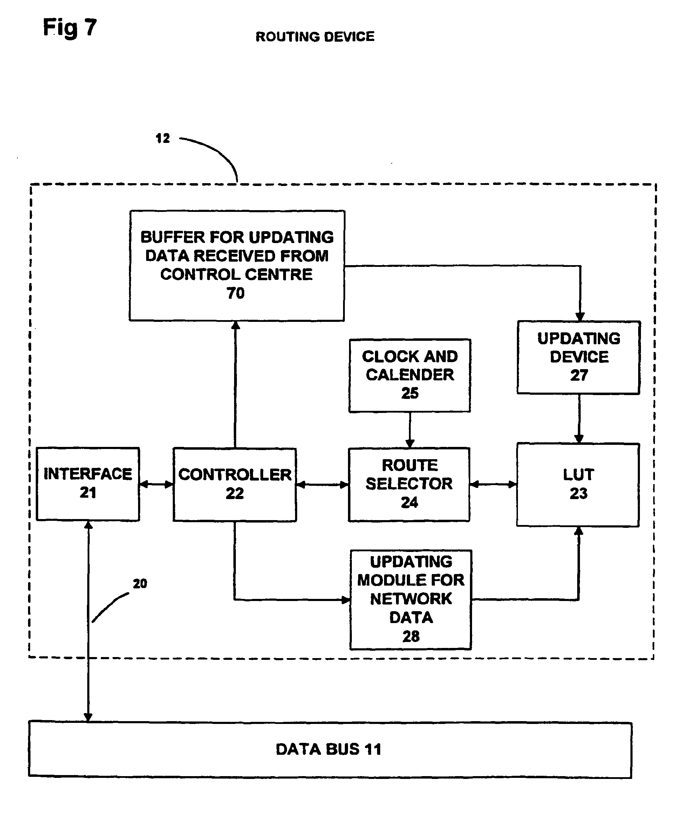

A further alternative embodiment will now be described with reference to Figure 7 using corresponding references to previous figures where appropriate.

Figure 7 illustrates schematically a routing device 12 which, unlike the routing device of Figure 2, does not include a receiver and decoder for receiving updating data.

The look-up table 23 of the routing device 12 of Figure 7 is updated by the transmission of data from the control centre 13 via one of the networks 15, 16, 17, 18, 181 and 19 illustrated in Figure 1, the data being received by one of the devices of the system 1 shown in Figure 1 and conducted via the data bus 11 to the routing device 12. The received data is processed by the controller 22 and stored in a buffer 70 which is accessed by the updating device 27 to overwrite data populating the look-up table 23 with updated information.

The communication session necessary to transmit the updating data from the control centre 13 to the routing device 12 may be initiated by the control centre as a point to point broadcast of data. Alternatively, the control centre 13 may broadcast a point to multipoint broadcast to a group of such routing devices 12 using for example the satellite 19, cable network 17, television network 181 or radio network 18. In the case of data transmitted by a television network 181, the data may be encoded in a vertical banking interval of the television signal in which case the interface 21 of the routing device of Figure 7 includes an appropriate decoder.

Alternatively, the communication session with the control centre 13 may be initiated by the routing device 12, using for example the public service telephone network 16 such that a telephone call is directed to the control centre 13 to establish two-way communication.

The routing device 12 additionally records in RAM 32 usage statistics for the system 1 and these statistics may then be communicated to the control centre 13 either as part of a request for updating information if initiated by the routing device 12 or alternatively in response to a request for information initiated by the control centre 13.

The control centre 13 collates information from a wide variety of sources in order to calculate the preferred routing information for routing devices 12 in a given geographical location. The control centre 13 also utilises the usage statistics obtained from the routing devices 12 to enable network traffic to be distributed evenly and to enable advantage to be taken of any bulk carrier discount available from network service providers. In this way, the control centre 13 enables the preferred route to achieve minimum cost and in some cases optimum network availability.

The system 1 requires the installation of an appropriate data bus 11 in the domestic environment. Twisted pair conductors may be utilised in a ring network arrangement as illustrated in Figure 1 or alternatively as a star network. Other forms of network may alternatively be utilised, including networks relying upon multiple conductors, co-axial cable, wireless communication systems such as RF, VHF or infrared systems, or utilizing the conductors of the mains electricity supply and the term data bus used above is to be construed accordingly as including such variants.

The routing device 12 described above has been referred to in the context of a stand alone device connected to the data bus 11. The routing device 12 may alternatively be housed unitarily with one of the devices connected to the network and may thereby share power supply and ancillary circuitry with the device. Alternatively, the routing device may be a virtual device implemented in software, as for example using an application running the personal computer 2 so as to provide the functionality provided with reference to Figure 7.

A routing device incorporated unitarily in a television receiver 7 such that both the television receiver and the routing device were connected to the data bus 11 could advantageously receive updating information via the television network 181.

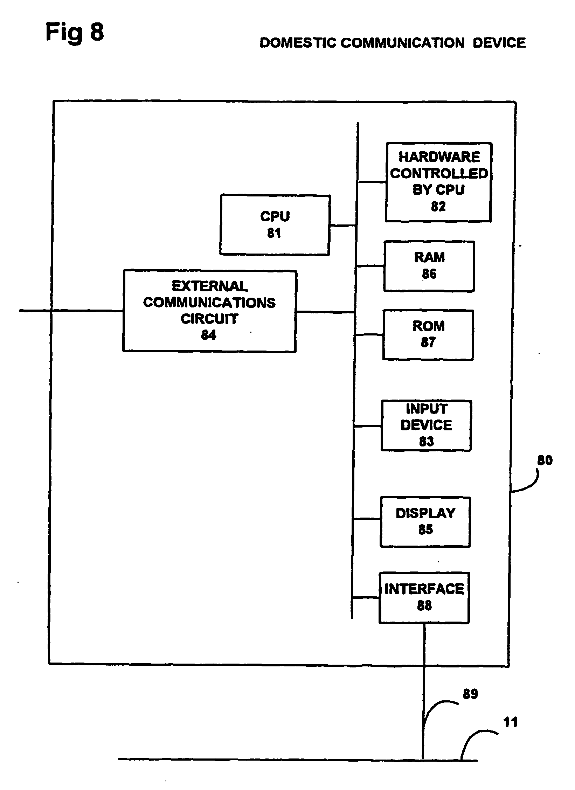

Figure 8 illustrates schematically the structure of a typical domestic communication device 80 for use in the system 1 of Figure 1. The device 80 includes a processor 81 which controls hardware 82 within the device in response to the input of control information using an input device 83.

The device 80 also includes an external communications circuit 84 and a display 85, in each case connected to the processor 81 via the internal bus of the device.

The processor 81 is also provided with RAM 86 and ROM 87. An interface 88 connects the internal bus of the device to the databus 11 of the system 1 via an input line 89.

The processor 81 together with the interface 88 generates a request message for routing information to be output onto the databus 11 when the processor receives a demand for a task requiring a communication session with an entity which is external to the system 1. The demand may be user generated, the user actuating the input device 83 to create the demand. The demand may alternatively originate from an application processed in the processor 81, such as for example an application for the periodic generation of such demands at predetermined times such as on an hourly, daily or weekly basis.

For example, the television receiver 7 may have a processor 81 which is programmed to request at a predetermined time a program guide. The routing information from the routing device may then be obtained in response to the demand, generated without user intervention, by the television receiver 7 in order to ensure that the program guide is obtained in the most cost effective manner.

An application for generating automatically such demands may receive control information generated by the user actuating the input device 83. The input device 83 may conveniently be a keypad or pointing device.

The input device 83 may also be used under certain circumstances to input information relevant to the routing of the communications session. It may for example be necessary for the user to manually input protocol or log-on parameters needed to access services via the PSTN 16 or other networks. The provision of certain services may also require the input of identification information such as PIN numbers.

The user may also utilise the input device 83 to input user preference data indicating the user's preference for the routing of the communication session. The user may for example have a preferred route or service provider or alternatively may wish to specify a route or service provider which is least preferred. The user may also input in a similar manner data indicating the unavailability of specific routes. This user preference data may then be communicated to the routing device in the request message and may form part of the route selection process.

An alternative routing device formed unitarily within a facsimile machine 3 such that both the routing device and the facsimile machine were connected to the data bus 11 could advantageously receive updating information from the control centre 13 via the public service telephone network 16. Alternatively, the routing device when formed unitarily with such devices as the television 7 and facsimile machine 3 could continue to receive updating information via a receiver/decoder 26 as shown in Figure 2 for receiving wireless communication.

In any of the above described embodiments in which wireless communication is for the transmission of updating information, a VHF band signal may be utilised, data being encoded in accordance with the POCSAG standard at 2400 BPS, using forward error coding of ECH type and interleaving. Such transmissions are presently available by pager transmission systems and may be used to transmit updating information during periods of minimum or off-peak pager message traffic.

The information broadcast from the control centre 13 is detected by each of the receiving antennae of routing devices 12 within the geographical area covered by the transmitting antenna. The data transmitted may contain address information corresponding to address information stored in the routing device 12, the information being arranged to allow the control centre 13 to selectively address all of the routing devices, groups of routing devices or individual routing devices within the geographical area covered by the transmitting area.

Other forms of wireless transmission and protocols may alternatively be utilised.

In the above described embodiments, the data stored in the routing device 12 defines the routing information and is updated with updating information without the need to perform any calculation. In alternative embodiments, the data transmitted from the control centre 13 comprises raw data from which the optimum routing information needs to be calculated by the routing device 12 and the processor 30 of the routing device 12 calculates the preferred route from the received data. Software for implementing the calculation may be downloaded from the control centre 13 or input by the user. The data may be stored in RAM and the calculation performed when a demand for routing information is received. Alternatively, the calculation may be performed when the updating information is received and the results of the calculation stored in RAM so as to be ready for use in response to the receipt of a demand from one of the devices of the system.

In the case for example of a demand for the routing of a facsimile message, the processor 30 of the routing device 12 calculates the least cost route on the basis of price information for a number of different routes. The price information may include different levels of price applicable according to time, day of the week and date, therefore requiring the routing device 12 to refer to the clock and calendar 25.

The sequence in which the look-up table 23 is utilised is described above with reference to Figure 5 which includes at step 53 the step of indicating that no routing information is available if the request does not correspond to any available pointer in the service selection table 40. Alternatively, the routing device 12 may be arranged to generate a response message in which the routing information defines a default route so that in each case the response message provides valid routing information to the device from which the demand originated.

In the above described embodiments, the tables which are accessed within the routing device may be structured as a single large table or may be subdivided into a plurality of smaller tables. References to a "table", for example in the context of the route access table 43 addressed in step 510, should therefore be understood to be equivalent to a reference to part of a larger table or alternatively a table comprising a number of smaller tables.

In the above described example in which the route selector 24 addresses the service selection table 40, a route selection code is obtained from the route selection table 41 in accordance with a predetermined order of preference. In the described examples, the order of preference is based on least cost. Other criteria may alternatively determine the order of preference, such as quality of service or response time. The order of preference may alternatively be determined by a combination of such attributes as cost, speed, quality, and user preference.

In the above described embodiments, the term 'routing device' is used in relation to a device which stores and selects routing information used for determining the route of one or more communication sessions. For the avoidance of doubt, it is to be understood that this terminology does not necessarily imply that the device acts as a conduit for the communications session and, in general, the routing device will not therefore constitute a routing switch.

Operation of the routing device 12 described above when implemented using a microprocessor relies upon a computer program which may be input to the routing device from a storage medium storing processor implementable instructions for controlling the processor to carry out and of the above described methods. The computer program may alternatively be obtained in electronic form for example by downloading the code over a network such as the internet.

Further aspects of the present invention therefore comprise a storage medium storing processor implementable instructions, and an electrical signal carrying processor implementable instructions, for controlling the processor to carry out the method of any one of the described embodiments.

Similarly, operation of the personal computer 2 and the devices 3, 4, 5, 6, 7, 8, 9 and 10 requires computer programs which may be provided as electronic signals or on storage medium and constitute further aspects of the present invention.

## Claims

1. A method of operating a domestic communication and entertainment system (1) in which a plurality of devices (2-10) of the system are interconnected by a data bus (11), the method comprising the steps of;
a first one of the devices receiving a demand for a task requiring a communication session with an entity which is external to the system;
the first device transmitting to a routing device (12) connected to the data bus a request message for routing information defining a preferred route for initiating the communication session;
the routing device transmitting to the first device a response message comprising the routing information; and
the first device initiating the communication session via a route determined by the routing information.

2. A method as claimed in claim 1 wherein the routing device obtains the requested routing information by addressing a look-up table (23) stored in the routing device.

3. A method as claimed in claim 2 wherein the look-up table is updated by the transmission of updating data from a control centre (13) external to and remote from the system.

4. A method as claimed in claim 3 wherein the updating data is transmitted to the routing device by wireless transmission.

5. A method as claimed in claim 3 wherein the updating data is transmitted to the routing device by a data communication via one of the devices of the system and via the data bus.

6. A method as claimed in any of claims 2 to 5 wherein, if the routing device determines that the requested routing information is not available in the look-up table, the routing device requests the routing information from the control centre by initiating a communications session therewith.

7. A method as claimed in any of claims 2 to 6 wherein the look-up table comprises a system availability table (42) containing data representative of the availability of devices connected in the system to the data bus and of communications networks to which the devices are connected.

8. A method as claimed in claim 7 including the step of updating the system availability table by transmitting data from a bus manager (2) of the data bus to the routing device via the data bus.

9. A method as claimed in any of claims 2 to 8 wherein the look-up table comprises a route selection table (41) containing routing code representative of a list in order of priority of preferred routes.

10. A method as claimed in any preceding claim wherein the route determined by the routing information requires the communication session to be initiated via a second one of the devices connected to the data bus.

11. A method as claimed in claim 10 wherein completion of the demanded task in accordance with the route determined by the routing information requires receipt of data via a third one of the devices of the system and communication of the data to the first device via the data bus.

12. A method as claimed in any preceding claim wherein the demanded task requires provision of a service by a service provider and wherein the routing information defines a selection of a preferred service provider.

13. A method as claimed in any preceding claim wherein the data bus transmits packetized data.

14. A method as claimed in claim 13 wherein the data bus transmits communications signals as isochronous packets and transmits request and response messages to and from the routing device respectively as asynchronous packets.

15. A method as claimed in any preceding claim wherein the demand received by the first device is a user generated demand which is input to the first device using an input means (83) of the first device.

16. A method as claimed in claim 15 wherein the user inputs user preference data indicating the user's preference for the routing of the communication session, the user preference data being transmitted to the routing device in the request message, and wherein the routing device determines the routing information in accordance with the user preference data.

17. A method as claimed in any preceding claims wherein the communication session for communicating with the entity external to the system is routed other than via the routing device.

18. A system (1) for use in providing domestic communication and entertainment telecommunications, the system comprising a plurality of devices (2-10), each device having communication means for performing at least one of sending and receiving telecommunications signals;
a data bus (11) interconnecting the devices and operable to conduct telecommunications signals therebetween;
a routing device (12) connected to the data bus, the routing device being operable to receive a request message for routing information from one of the devices and further operable to respond by generating a response message comprising the routing information for receipt by the device originating the request message; and
wherein the device originating the request message is operable to initiate a communication session for communicating with an entity which is external to the system via a route determined by the routing information.

19. A system as claimed in claim 18 wherein the routing device comprises a look-up table (23) storing the routing information.

20. A system as claimed in claim 19 comprising means (26) for receiving updating data from a control centre (13) external to and remote from the system and means (27) for updating the look-up table with the received updating data.

21. A system as claimed in claim 20 wherein the receiving means comprises a wireless receiver (26).

22. A system as claimed in claim 20 wherein the means for receiving updating data comprises one of the devices of the system connected to the data bus whereby the data bus is operable to transmit the received updating data to the routing device.

23. A system as claimed in any of claims 19 to 22, wherein the routing device comprises means (24) for determining whether the requested routing information is available in the look-up table, and when it is determined that the information is not available, the routing device is operable to request the routing information from the control centre by initiating a communications session therewith.

24. A system as claimed in any of claims 19 to 23 wherein the look-up table comprises a system availability table (42) containing data representative of the availability of devices connected in the system to the data bus and of communications networks to which the devices are connected in use.

25. A system as claimed in claim 24 wherein the system further comprises a bus manager (2) for controlling operation of the data bus and wherein the routing means comprises means (28) for updating the system availability table in response to the receipt of data via the data bus from the bus manager of the data bus.

26. A system as claimed in any of claims 19 to 25 wherein the look-up table comprises a route selection table (41) containing routing code representative of a list of preferred routes in order of preference.

27. A system as claimed in any of claims 18 to 26 wherein the routing information requires the communication session to be initiated via a second one of the devices connected to the data bus and selected in accordance with the routing information.

28. A system as claimed in claim 27 wherein the route determined by the routing information requires receipt of data via a third one of the devices of the system and communication of the data to the first device via the data bus for completion of the task demanded by the user.

29. A routing device (12) for use in a domestic communication and entertainment system (1), the device comprising;
an interface (21) for connection in use to a data bus (11) of the system;
a look-up table (23) populated with data defining routing information;
a route selector (24) operable to address the look-up table in response to receipt of a request message via the interface for routing information; and
a controller (22) operable to generate a response message output via the interface and comprising the routing information.

30. A routing device as claimed in claim 29 comprising an updating device (27) for updating the routing information contained in the look-up table with updating information.

31. A routing device as claimed in claim 30 further comprising a wireless receiver (26) for receiving signals representative of the updating information and for inputting the updating information to the updating device.

32. A routing device as claimed in any of claims 29 to 31 further comprising means (28) for updating the look-up table with system data indicating the availability of devices connected in use to the routing device via the data bus and wherein the updating means is responsive to messages containing updating data received via the interface from the data bus.

33. A method of operating a routing device (12) in a domestic communication and entertainment system (1), the device comprising;
an interface (21) connected to a data bus (11) of the system; and
a look-up table (23) populated with data defining routing information; the method comprising:
addressing the look-up table in response to receipt of a request message via the interface, the request message comprising a request for routing information and originating from a device of the system; and
generating a response message comprising the routing information; and
outputting the response message via the interface for transmission to the device of the system from which the request message originated.

34. A method as claimed in claim 33 comprising updating the routing information contained in the look-up table with updating information .

35. A method as claimed in claim 34 further comprising receiving wireless communication signals representative of the updating information.

36. A method as claimed in any of claims 33 to 35 further comprising the step of updating the look-up table with system data indicating the availability of devices connected to the routing device via the data bus and wherein the updating step is responsive to messages containing updating data received via the interface from the data bus.

37. A computer program comprising processor implementable instructions for carrying out each step of the method of any one of claims 1 to 17 and 33 to 36.

38. A storage medium storing processor implementable instructions for controlling a processor to carry out each step of the method of any one of claims 1 to 17 and 33 to 36.

39. An electrical signal carrying processor implementable instructions for controlling a processor to carry out each step of the method of any one of claims 1 to 17 and 33 to 36.

40. An electromagnetic signal carrying updating data for updating routing information stored in the routing device in accordance with each step of a method as claimed in any one of claims 3, 4 and 5.

## Patentansprüche

1. Verfahren zum Betreiben eines häuslichen Kommunikations- und Unterhaltungssystems (1), bei dem mehrere Geräte (2-10) des Systems durch einen Datenbus (11) miteinander verbunden sind, wobei das Verfahren die folgenden Schritte umfasst:
Empfangen, durch ein erstes der Geräte, einer Anfrage nach einer Aufgabe, die eine Kommunikationssitzung mit einer Einheit erfordert, die extern zum System angeordnet ist;
Übertragen, durch das erste Gerät, einer Anforderungsnachricht für Routing-Informationen, die eine bevorzugte Route zum Einleiten der Kommunikationssitzung definieren, an ein mit dem Datenbus verbundenes Routing-Gerät (12);
Übertragen, durch das Routing-Gerät, einer die Routing-Informationen umfassenden Antwortnachricht an das erste Gerät und
Einleiten, durch das erste Gerät, der Kommunikationssitzung über eine durch die Routing-Informationen bestimmte Route.

2. Verfahren nach Anspruch 1, wobei das Routing-Gerät die angeforderten Routing-Informationen durch Ansteuern einer im Routing-Gerät gespeicherten Nachschlagetabelle (23) erhält.

3. Verfahren nach Anspruch 2, wobei die Nachschlagetabelle durch die Übertragung von Aufdatierungsdaten von einer extern und entfernt vom System angeordneten Steuerzentrale (13) aufdatiert wird.

4. Verfahren nach Anspruch 3, wobei die Aufdatierungsdaten durch kabellose Übertragung an das Routing-Gerät übertragen werden.

5. Verfahren nach Anspruch 3, wobei die Aufdatierungsdaten durch eine Datenkommunikation über eines der Geräte des Systems und über den Datenbus an das Routing-Gerät übertragen werden.

6. Verfahren nach einem der Ansprüche 2 bis 5, wobei das Routing-Gerät, wenn es feststellt, dass die angeforderten Routing-Informationen nicht in der Nachschlagetabelle verfügbar sind, die Routing-Informationen von der Steuerzentrale durch Einleiten einer Kommunikationssitzung mit dieser anfordert.

7. Verfahren nach einem der Ansprüche 2 bis 6, wobei die Nachschlagetabelle eine Systemverfügbarkeitstabelle (42) umfasst, die Daten enthält, die die Verfügbarkeit von in dem System mit dem Datenbus verbundenen Geräten und Kommunikationsnetzwerken, mit denen die Geräte verbunden sind, repräsentieren.

8. Verfahren nach Anspruch 7, umfassend das Aufdatieren der Systemverfügbarkeitstabelle durch Übertragen von Daten von einer Busverwaltungseinrichtung (2) des Datenbusses über den Datenbus an das Routing-Gerät.

9. Verfahren nach einem der Ansprüche 2 bis 8, wobei die Nachschlagetabelle eine Routenauswahltabelle (41) umfasst, die Routing-Code enthält, der eine Liste der bevorzugten Routen in der Reihenfolge von Prioritäten repräsentiert.

10. Verfahren nach einem der vorhergehenden Ansprüche, wobei die durch die Routing-Informationen bestimmte Route es erfordert, dass die Kommunikationssitzung über ein zweites der mit dem Datenbus verbundenen Geräte eingeleitet wird.

11. Verfahren nach Anspruch 10, wobei die Beendigung der verlangten Aufgabe in Übereinstimmung mit der durch die Routing-Informationen bestimmten Route den Empfang von Daten über ein drittes der Geräte des Systems sowie die Kommunikation der Daten über den Datenbus an das erste Gerät erfordert.

12. Verfahren nach einem der vorhergehenden Ansprüche, wobei die verlangte Ausgabe eine Dienstleistung eines Dienstleisters erfordert und wobei die Routing-Informationen eine Auswahl eines bevorzugten Dienstleisters definieren.

13. Verfahren nach einem der vorhergehenden Ansprüche, wobei der Datenbus Paketdaten überträgt.

14. Verfahren nach Anspruch 13, wobei der Datenbus Kommunikationssignale als zeitgleiche Pakete überträgt und Anforderungs- und Antwortnachrichten an das Routing-Gerät und von diesem jeweils als asynchrone Pakete überträgt.

15. Verfahren nach einem der vorhergehenden Ansprüche, wobei die vom ersten Gerät empfangene Anforderung eine benutzererzeugte Anforderung ist, die mittels einer Eingabeeinrichtung (83) des ersten Geräts in das erste Gerät eingegeben wird.

16. Verfahren nach Anspruch 15, wobei der Benutzer Benutzerpräferenzdaten eingibt, die die Präferenzen des Benutzers für das Routing der Kommunikationssitzung angeben, wobei die Benutzerpräferenzdaten an das Routing-Gerät in der Aufforderungsnachricht übertragen werden und wobei das Routing-Gerät die Routing-Informationen gemäß den Benutzerpräferenzdaten bestimmt .

17. Verfahren nach einem der vorhergehenden Ansprüche, wobei die Kommunikationssitzung zum Kommunizieren mit der zum System externen Einheit anders als über das Routing-Gerät geroutet wird.

18. System (1) zur Verwendung bei der Bereitstellung von Telekommunikation für häusliche Kommunikation und Unterhaltung, wobei das System umfasst:
mehrere Geräte (2-10), deren jedes eine Kommunikationseinrichtung zum Ausführen von Senden und/oder Empfangen von Telekommunikationssignalen aufweist;
einen Datenbus (11), der die Geräte miteinander verbindet und dazu dient, Telekommunikationssignale zwischen ihnen zu führen;
ein mit dem Datenbus verbundenes Routing-Gerät (12), wobei das Routing-Gerät dazu dient, eine Anforderungsnachricht für Routing-Informationen von einem der Geräte zu empfangen und ferner dazu dient, durch Erzeugen einer die Routing-Informationen enthaltenden Antwortnachricht zum Empfang durch das die Anforderungsnachricht ausgebende Gerät zu antworten; und
wobei das die Anforderungsnachricht ausgebende Gerät dazu dient, eine Kommunikationssitzung zur Kommunikation über eine durch die Routing-Informationen bestimmte Route mit einer Einheit einzuleiten, die extern zum System angeordnet ist.

19. System nach Anspruch 18, wobei das Routing-Gerät eine die Routing-Informationen speichernde Nachschlagetabelle (23) umfasst.

20. System nach Anspruch 19, umfassend eine Einrichtung (26) zum Empfangen von Aufdatierungsdaten von einer extern und entfernt vom System angeordneten Steuerzentrale (13) sowie eine Einrichtung (27) zum Aufdatieren der Nachschlagetabelle mit den empfangenen Aufdatierungsdaten.

21. System nach Anspruch 20, wobei die Empfangseinrichtung einen kabellosen Empfänger (26) umfasst.

22. System nach Anspruch 20, wobei die Einrichtung zum Empfangen von Aufdatierungsdaten eines der mit dem Datenbus verbundenen Geräte des Systems umfasst, wodurch der Datenbus dazu dient, die empfangenen Aufdatierungdaten an das Routing-Gerät zu übertragen.

23. System nach einem der Ansprüche 19 bis 22, wobei das Routing-Gerät eine Einrichtung (24) zum Bestimmen, ob die angeforderten Routing-Informationen in der Nachschlagetabelle verfügbar sind, umfasst und das Routing-Gerät, wenn es feststellt, dass die Informationen nicht verfügbar sind, dazu ausgelegt ist, die Routing-Informationen von der Steuerzentrale durch Einleiten einer Kommunikationssitzung mit dieser anzufordern.

24. System nach einem der Ansprüche 19 bis 23, wobei die Nachschlagetabelle eine Systemverfügbarkeitstabelle (42) umfasst, die Daten enthält, die die Verfügbarkeit von in dem System mit dem Datenbus verbundenen Geräten und von Kommunikationsnetzwerken, mit denen die Geräte im Betrieb verbunden sind, repräsentieren.

25. System nach Anspruch 24, wobei das System ferner eine Busverwaltungseinrichtung (2) zum Steuern des Betriebs des Datenbusses umfasst und wobei die Routing-Einrichtung eine Einrichtung (28) zum Aufdatieren der Systemverfügbarkeitstabelle auf den Empfang von Daten von der Busverwaltungseinrichtung des Datenbusses über den Datenbus hin umfasst.

26. System nach einem der Ansprüche 19 bis 25, wobei die Nachschlagetabelle eine Routenauswahltabelle (41) umfasst, die Routing-Code enthält, der eine Liste bevorzugter Routen in der Reihenfolge der Präferenz enthält.

27. System nach einem der Ansprüche 18 bis 26, wobei die Routing-Informationen es erfordern, dass die Kommunikationssitzung über ein zweites der Geräte eingeleitet wird, das mit dem Datenbus verbunden ist und gemäß den Routing-Informationen ausgewählt worden ist.

28. System nach Anspruch 27, wobei die durch die Routing-Informationen bestimmte Route den Empfang von Daten über ein drittes der Geräte des System sowie Kommunikation der Daten über den Datenbus an das erste Gerät zum Beenden der vom Benutzer verlangten Aufgabe erfordert.

29. Routing-Gerät (12) zur Verwendung in einem häuslichen Kommunikations- und Unterhaltungssystem (1), wobei das Gerät umfasst:
eine Schnittstelle (21) zum Verbinden eines Datenbusses (11) des Systems im Betrieb;
eine Nachschlagetabelle (23), die mit Daten gefüllt ist, die Routing-Informationen definieren;
eine Routen-Auswahleinrichtung (24), die dazu ausgelegt ist, die Nachschlagetabelle auf den Empfang einer Anforderungsnachricht nach Routing-Informationen über die Schnittstelle hin anzusteuern; und
eine Steuerungseinrichtung (22), die dazu ausgelegt ist, eine Antwortnachricht zu erzeugen, die über die Schnittstelle ausgegeben wird und die Routing-Informationen umfasst.

30. Routing-Gerät nach Anspruch 29, umfassend ein Aufdatierungsgerät (27) zum Aufdatieren der in der Nachschlagetabelle enthaltenen Routing-Informationen mit Aufdatierungsinformationen.

31. Routing-Gerät nach Anspruch 30, ferner umfassend einen kabellosen Empfänger zum Empfangen von Signalen, die die Aufdatierungsinformationen repräsentieren, und zum Eingeben der Aufdatierungsinformationen in das Aufdatierungsgerät.

32. Routing-Gerät nach einem der Ansprüche 29 bis 31, ferner umfassend eine Einrichtung (28) zum Aufdatieren der Nachschlagetabelle mit Systemdaten, die die Verfügbarkeit von im Betrieb über den Datenbus mit dem Routing-Gerät verbundenen Geräten angeben, und wobei die Aufdatierungseinrichtung auf Nachrichten reagiert, die Aufdatierungsdaten enthalten, die über die Schnittstelle vom Datenbus empfangen worden sind.

33. Verfahren zum Betreiben eines Routing-Geräts (12) in einem häuslichen Kommunikations- und Unterhaltungssystem (1), wobei das Gerät umfasst:
eine mit einem Datenbus (11) des Systems verbundene Schnittstelle (21) und
eine Nachschlagetabelle (23), die mit Daten gefüllt ist, die Routing-Informationen definieren;
wobei das Verfahren umfasst:
Ansteuern der Nachschlagetabelle auf den Empfang einer Anforderungsnachricht über die Schnittstelle hin, wobei die Anforderungsnachricht eine Anforderung für Routing-Informationen umfasst und von einem Gerät des Systems ausgeht;
Erzeugen einer Antwortnachricht, die die Routing-Informationen umfasst; und
Ausgeben der Antwortnachricht über die Schnittstelle zur Übertragung an das Gerät des Systems, von dem die Anforderungsnachricht ausgegangen ist.

34. Verfahren nach Anspruch 33, umfassend das Aufdatieren der in der Nachschlagetabelle enthaltenen Routing-Informationen mit Aufdatierungsinformationen.

35. Verfahren nach Anspruch 34, ferner umfassend das Empfangen kabelloser Kommunikationssignale, die die Aufdatierungsinformationen repräsentieren.

36. Verfahren nach einem der Ansprüche 33 bis 35, ferner umfassend das Aufdatieren der Nachschlagetabelle mit Systemdaten, die die Verfügbarkeit von über den Datenbus mit dem Routing-Gerät verbundenen Geräten anzeigen, und wobei das Aufdatieren auf Nachrichten hin geschieht, die über die Schnittstelle vom Datenbus empfangene Aufdatierungdaten enthalten.

37. Computerprogramm umfassend prozessorimplementierbare Anweisungen zum Ausführen aller Schritte des Verfahrens nach einem der Ansprüche 1 bis 17 und 33 bis 36.

38. Speichermedium, das prozessorimplementierbare Anweisungen zur Steuerung eines Prozessors zum Ausführen aller Schritte des Verfahrens eines der Ansprüche 1 bis 17 und 33 bis 36 speichert.

39. Elektrisches Signal, das prozessorimplementierbare Anweisungen zum Steuern eines Prozessors zum Ausführen aller Schritte des Verfahrens eines der Ansprüche 1 bis 17 und 33 bis 36 trägt.

40. Elektromagnetisches Signal, das Aufdatierungsdaten zum Aufdatieren von Routing-Informationen trägt, die im Routing-Gerät gemäß allen Schritten eines Verfahrens nach einem Ansprüche 3, 4 und 5 gespeichert sind.

## Revendications

1. Procédé de mise en oeuvre d'un système domestique (1) de communication et de divertissement dans lequel de multiples dispositifs (2-10) du système sont interconnectés par un bus (11) de données, le procédé comprenant les étapes dans lesquelles :
un premier des dispositifs reçoit une demande pour une tâche nécessitant une session de communication avec une entité qui est extérieure au système ;
le premier dispositif transmet à un dispositif de routage (12) connecté au bus de données un message de demande pour une information de routage définissant une route préférée pour amorcer la session de communication ;
le dispositif de routage transmet au premier dispositif un message de réponse comprenant l'information de routage ; et
le premier dispositif amorce la session de communication en passant par une route déterminée par l'information de routage.

2. Procédé selon la revendication 1, dans lequel le dispositif de routage obtient l'information de routage demandée en s'adressant à une table à consultation (23) stockée dans le dispositif de routage.

3. Procédé selon la revendication 2, dans lequel la table à consultation est mise à jour par la transmission de données de mise à jour depuis un centre de commande (13) extérieur au système et éloigné de celui-ci.

4. Procédé selon la revendication 3, dans lequel les données de mise à jour sont transmises au dispositif de routage par une transmission sans fil.

5. Procédé selon la revendication 3, dans lequel les données de mise à jour sont transmises au dispositif de routage par une communication de données passant par l'un des dispositifs du système et par le bus de données.

6. Procédé selon l'une quelconque des revendications 2 à 5, dans lequel, si le dispositif de routage détermine que l'information de routage demandée n'est pas disponible dans la table à consultation, le dispositif de routage demande l'information de routage au centre de commande en amorçant avec lui une session de communications.

7. Procédé selon l'une quelconque des revendications 2 à 6, dans lequel la table à consultation comporte une table (42) de disponibilité de système contenant des données représentatives de la disponibilité de dispositifs connectés dans le système au bus de données et de réseaux de communications auxquels les dispositifs sont connectés.

8. Procédé selon la revendication 7, comprenant l'étape de mise à jour de la table de disponibilité du système en transmettant des données depuis un gestionnaire (2) de bus du bus de données au dispositif de routage en passant par le bus de données.

9. Procédé selon l'une quelconque des revendications 2 à 8, dans lequel la table à consultation comprend une table (41) de sélection de route contenant un code de routage représentatif d'une liste dans un ordre de priorité de routes préférées.

10. Procédé selon l'une quelconque des revendications précédentes, dans lequel la route déterminée par l'information de routage demande que la session de communication soit amorcée en passant par un deuxième des dispositifs connectés au bus de données.

11. Procédé selon la revendication 10, dans lequel l'achèvement de la tâche demandée conformément à la route déterminée par l'information de routage exige la réception de données en passant par un troisième des dispositifs du système et une communication des données au premier dispositif par l'intermédiaire du bus de données.

12. Procédé selon l'une quelconque des revendications précédentes, dans lequel la tâche demandée nécessite la fourniture d'un service par un fournisseur de service, et dans lequel l'information de routage définit une sélection d'un fournisseur de service préféré.

13. Procédé selon l'une quelconque des revendications précédentes, dans lequel le bus de données transmet des données en paquets.

14. Procédé selon la revendication 13, dans lequel le bus de données transmet des signaux de communication sous forme de paquets isochrones et transmet des messages de demande et de réponse à et depuis le dispositif de routage respectivement sous forme de paquets asynchrones.

15. Procédé selon l'une quelconque des revendications précédentes, dans lequel la demande reçue par le premier dispositif est une demande générée par un utilisateur qui est appliquée en entrée au premier dispositif en utilisant un moyen d'entrée (83) du premier dispositif.

16. Procédé selon la revendication 15, dans lequel l'utilisateur applique en entrée des données de préférence d'utilisateur indiquant la préférence de l'utilisateur pour le routage de la session de communication, les données de préférence d'utilisateur étant transmises au dispositif de routage dans le message de demande, et dans lequel le dispositif de routage détermine l'information de routage conformément aux données de préférence de l'utilisateur.

17. Procédé selon l'une quelconque des revendications précédentes, dans lequel la session de communication pour une communication avec l'entité extérieure au système est routée autrement qu'en passant par le dispositif de routage.

18. Système (1) destiné à être utilisé dans l'établissement de télécommunications domestiques de communication et de divertissement, le système comportant de multiples dispositifs (2-10), chaque dispositif ayant un moyen de communication pour effectuer au moins l'un d'un envoi et d'une réception de signaux de télécommunications ;
un bus (11) de données interconnectant les dispositifs et pouvant être mis en oeuvre pour conduire entre eux des signaux de télécommunications ;
un dispositif de routage (12) connecté au bus de données, le dispositif de routage pouvant être mis en oeuvre pour recevoir un message de demande pour le routage d'une information depuis l'un des dispositifs et pouvant être en outre mis en oeuvre pour répondre en générant un message de réponse comprenant l'information de routage pour une réception par le dispositif à l'origine du message de demande ; et
dans lequel le dispositif à l'origine du message de demande peut être mis en oeuvre pour amorcer une session de communication pour communiquer avec une entité qui est extérieure au système en passant par une route déterminée par l'information de routage.

19. Système selon la revendication 18, dans lequel le dispositif de routage comporte une table (23) à consultation stockant l'information de routage.

20. Système selon la revendication 19, comportant un moyen (26) destiné à recevoir des données de mise à jour depuis un centre de commande (13) extérieur au système et éloigné de celui-ci et un moyen (27) destiné à mettre à jour la table à consultation avec les données de mise à jour reçues.

21. Système selon la revendication 20, dans lequel le moyen de réception comporte un récepteur sans fil (26).

22. Système selon la revendication 20, dans lequel le moyen destiné à recevoir des données de mise à jour comprend l'un des dispositifs du système connectés au bus de données, grâce à quoi le bus de données peut être mis en oeuvre pour transmettre les données de mise à jour reçues au dispositif de routage.

23. Système selon l'une quelconque des revendications 19 à 22, dans lequel le dispositif de routage comporte un moyen (24) destiné à déterminer si l'information de routage demandée est disponible dans la table à consultation, et lorsqu'il est déterminé que l'information n'est pas disponible, le dispositif de routage peut être mis en oeuvre pour demander l'information de routage depuis le centre de commande en amorçant avec lui une session de communications.

24. Système selon l'une quelconque des revendications 19 à 23, dans lequel la table à consultation comprend une table (42) de disponibilité du système contenant des données représentatives de la disponibilité de dispositifs connectés dans le système au bus de données et de réseaux de communications auxquels les dispositifs sont connectés lors de l'utilisation.

25. Système selon la revendication 24, lequel système comporte en outre un gestionnaire (2) de bus destiné à commander le fonctionnement du bus de données, et dans lequel le moyen de routage comprend un moyen (28) destiné à mettre à jour la table de disponibilité du système en réponse à la réception de données en passant par le bus de données depuis le gestionnaire de bus du bus de données.

26. Système selon l'une quelconque des revendications 19 à 25, dans lequel la table à consultation comprend une table (41) de sélection de route contenant un code de routage représentatif d'une liste de routes préférées dans un ordre de préférence.

27. Système selon l'une quelconque des revendications 18 à 26, dans lequel l'information de routage nécessite que la session de communication soit amorcée en passant par un deuxième des dispositifs connectés au bus de données et sélectionnée conformément à l'information de routage.

28. Système selon la revendication 27, dans lequel la route déterminée par l'information de routage nécessite la réception de données en passant par un troisième des dispositifs du système et la communication des données au premier dispositif en passant par le bus de données pour mener à bien la tâche demandée par l'utilisateur.

29. Dispositif de routage (12) destiné à être utilisé dans un système domestique (1) de communication et de divertissement, le dispositif comportant :
une interface (21) pour une connexion lors de l'utilisation sur un bus (11) de données du système ;
une table à consultation (23) peuplée de données définissant une information de routage ;
un sélecteur (24) de route pouvant être mis en oeuvre pour s'adresser à la table à consultation en réponse à la réception d'un message de demande en passant par l'interface pour une information de routage ; et
une unité de commande (22) pouvant être mise en oeuvre pour générer un message de réponse délivré en sortie en passant par l'interface et comprenant l'information de routage.

30. Dispositif de routage selon la revendication 29, comportant un dispositif (27) de mise à jour destiné à mettre à jour l'information de routage contenue dans la table à consultation avec une information de mise à jour.

31. Dispositif de routage selon la revendication 30, comportant en outre un récepteur sans fil (26) destiné à recevoir des signaux représentatifs de l'information de mise à jour et à appliquer en entrée au dispositif de mise à jour l'information de mise à jour.

32. Dispositif de routage selon l'une quelconque des revendications 29 à 31, comportant en outre un moyen (28) destiné à mettre à jour la table à consultation avec des données du système indiquant la disponibilité de dispositifs connectés lors de l'utilisation au dispositif de routage en passant par le bus de données, et dans lequel le moyen de mise à jour réagit à des messages contenant des données de mise à jour reçues en passant par l'interface depuis le bus de données.

33. Procédé de mise en oeuvre d'un dispositif de routage (12) dans un système domestique (1) de communication et de divertissement, le dispositif comportant :
une interface (21) connectée à un bus de données (11) du système ; et
une table à consultation (23) peuplée de données définissant une information de routage ; le procédé comprenant :
l'adressage de la table à consultation en réponse à la réception d'un message de demande en passant par l'interface, le message de demande comprenant une demande pour une information de routage et ayant pour origine un dispositif du système ; et
la génération d'un message de réponse comprenant l'information de routage ; et
la sortie du message de réponse en passant par l'interface pour une transmission au dispositif du système à l'origine du message de demande.

34. Procédé selon la revendication 33, comprenant la mise à jour de l'information de routage contenue dans la table à consultation avec une information de mise à jour.

35. Procédé selon la revendication 34, comprenant en outre la réception de signaux de communication sans fil représentatifs de l'information de mise à jour.

36. Procédé selon l'une quelconque des revendications 33 à 35, comprenant en outre l'étape de mise à jour de la table à consultation avec des données du système indiquant la disponibilité de dispositifs connectés au dispositif de routage par l'intermédiaire du bus de données, et dans lequel l'étape de mise à jour réagit à des messages contenant des données de mise à jour reçues depuis le bus de données en passant par l'interface.

37. Programme d'ordinateur comprenant des instructions exécutables par un processeur pour exécuter chaque étape du procédé selon l'une quelconque des revendications 1 à 17 et 33 à 36.

38. Support de stockage stockant des instructions exécutables par un processeur pour commander un processeur afin qu'il exécute chaque étape du procédé selon l'une quelconque des revendications 1 à 17 et 33 à 36.

39. Signal électrique transportant des instructions exécutables par un processeur pour commander un processeur afin qu'il exécute chaque étape du procédé selon l'une quelconque des revendications 1 à 17 et 33 à 36.

40. Signal électromagnétique transportant des données de mise à jour pour la mise à jour d'une information de routage stockée dans le dispositif de routage conformément à chaque étape d'un procédé selon l'une quelconque des revendications 3, 4 et 5.
